# EUROPÄISCHE PATENTSCHRIFT

(11) **EP 1 437 355 B1**
(45) Veröffentlichungstag und Bekanntmachung des Hinweises auf die Patenterteilung: **28.06.2006**
(21) Anmeldenummer: 03029974.7
(22) Anmeldetag: 30.12.2003
(51) Int. Cl.: C07F 1/08

(54) **Kupfer-Carben-Komplexe und ihre Verwendung**
Copper carbene complexes and the use thereof
Cu complexes de carbènes et leur utilisation

(30) Priorität: 07.01.2003 DE 10300098
(43) Veröffentlichungstag der Anmeldung: 14.07.2004
(73) Patentinhaber: LANXESS Deutschland GmbH, 51369 Leverkusen (DE)
(72) Erfinder: Kunz, Klaus, Dr., 40235 Düsseldorf (DE); Scholz, Ulrich, Dr., 45475 Mülheim (DE); Gaertzen, OIiver, Dr., 50668 Köln (DE); Ganzer, Dirk, 51373 Leverkusen (DE); Wesener, Joachim, Dr., 51061 Köln (DE)

(56) Entgegenhaltungen:
- JURKAUSKAS, VALDAS ET AL: "Conjugate Reduction of .alpha.,.beta.-Unsaturated Carbonyl Compounds Catalyzed by a Copper Carbene Complex" ORGANIC LETTERS , 5(14), 2417-2420 CODEN: ORLEF7; ISSN: 1523-7060, 2003, XP002276473
- TULLOCH, ARRAN A. D. ET AL: "Structural Diversity in Pyridine-N-Functionalized Carbene Copper(I) Complexes" ORGANOMETALLICS , 20(10), 2027-2031 CODEN: ORGND7; ISSN: 0276-7333, 2001, XP002276474
- KU, RONG-ZHI ET AL: "Metal Ion Mediated Transfer and Cleavage of Diaminocarbene Ligands" ORGANOMETALLICS , 18(11), 2145-2154 CODEN: ORGND7; ISSN: 0276-7333, 1999, XP002276475
- DATABASE CHEMABS [Online] CHEMICAL ABSTRACTS SERVICE, COLUMBUS, OHIO, US; ARDUENGO, ANTHONY J., III ET AL: "Investigation of a mercury(II) carbene complex: bis(1,3- dimethylimidazol-2-ylidene)mercury chloride" XP002276476 gefunden im STN Database accession no. 1996:720973 & HETEROATOM CHEMISTRY , 7(6), 421-426 CODEN: HETCE8; ISSN: 1042-7163, 1996,
- DATABASE CHEMABS [Online] CHEMICAL ABSTRACTS SERVICE, COLUMBUS, OHIO, US; RAUBENHEIMER, HELGARD G. ET AL: "Bis(carbene) complexes of copper prepared from lithiated azoles" XP002276477 gefunden im STN Database accession no. 1995:525694 & JOURNAL OF CHEMICAL RESEARCH, SYNOPSES , (5), 184-5 CODEN: JRPSDC; ISSN: 0308-2342, 1995,
- DATABASE CHEMABS [Online] CHEMICAL ABSTRACTS SERVICE, COLUMBUS, OHIO, US; RAUBENHEIMER, HELGARD G. ET AL: "Synthesis and characterization of mono(carbene) complexes of copper and crystal structure of a linear thiazolinylidene compound" XP002276478 gefunden im STN Database accession no. 1995:336156 & JOURNAL OF THE CHEMICAL SOCIETY, DALTON TRANSACTIONS: INORGANIC CHEMISTRY , (2), 313-16 CODEN: JCDTBI; ISSN: 0300-9246, 1995,
- ARDUENGO, ANTHONY J., III ET AL: "Homoleptic carbene-silver(I) and carbene-copper(I) complexes" ORGANOMETALLICS , 12(9), 3405-9 CODEN: ORGND7; ISSN: 0276-7333, 1993, XP0002198946

## Beschreibung

Die Erfindung betrifft Kupfer-Carben-Komplexe, ein Verfahren zu deren Herstellung sowie ihre Verwendung in katalytischen Kupplungsreaktionen.

Knüpfungen von Kohlenstoff-Heteroatom-Bindungen haben in der modernen Synthese eine enorme Bedeutung gewonnen.

So werden beispielsweise N-substituierte Aniline beispielsweise durch Kupplung von aktivierten Chlor-, Brom- oder Iodaromaten mit primären oder sekundären Aminen in Gegenwart eines Palladiumkatalysators, eines Phosphans und einer Base hergestellt (siehe Hartwig, Angew. Chem., Int. Ed. **1998**, 37, 2046-2067; Buchwald, Top. Curr. Chem. **2002**, 219, 131-209). Alternativ können anstatt der Phosphane auch N-heterocyclische Carbene eingesetzt werden (WO 0 1/66248).

Der Nachteil der beschriebenen Synthesen ist die Verwendung von Palladium, welches teuer, starken Preisschwankungen unterworfen und nur schwierig rezyklierbar ist.

Aus Venkataraman et al. (Tetrahedron Letters, **2001**, 42, 4791-4793) ist bekannt, präformierte Komplexe aus Kupferdibromid und Triphenylphosphin zur Addition von Arylhalogeniden an sekundäre aromatische Amine einzusetzen. Nachteilig an dieser Methode ist jedoch die oftmals nur geringe Chemoselektivität und das schmale Spektrum an Reaktionen, in denen technisch akzeptable Umsätze und Umsatzraten erzielt werden können. Weiterhin ist die Oxidationsempfindlichkeit von Phosphanen problematisch.

Es bestand daher das Bedürfnis, Katalysatoren bereitzustellen, die einfach herzustellen sind und in Kupplungsreaktionen in guten Ausbeuten die gewünschten Produkte liefern.

Gegenstand der vorliegenden Erfindung sind daher Katalysatoren enthaltend Kupferkomplexe enthaltend Liganden der Formel (I) 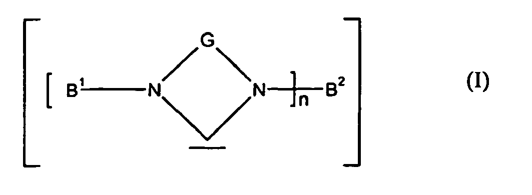 in der
- G: für einen 1,2-Ethandiyl- oder 1,2-Ethendiyl-Rest steht, der gegebenenfalls einfach oder mehrfach substituiert ist und
- B¹: für C₅-C₁₈-Aryl, C₁-C₁₈-Alkyl, das gegebenenfalls eines oder mehrere Heteroatome aus der Gruppe Sauerstoff, Stickstoff oder Schwefel enthalten kann oder C₆-C₁₉-Aralkyl und
- B²: für einen n-valenten Rest mit insgesamt 2 bis 40 Kohlenstoffatomen und
- n: für 1, 2 oder 3 steht.

Im Rahmen der Erfindung können alle oben stehenden und im Folgenden aufgeführten, allgemeinen oder in Vorzugsbereichen genannten Restedefinitionen, Parameter und Erläuterungen untereinander, also auch zwischen den jeweiligen Bereichen und Vorzugsbereichen in beliebiger Weise kombiniert werden.

**Alkyl** beziehungsweise **Alkoxy** beziehungsweise **Alkylen** beziehungsweise **Alkenylen** bedeutet jeweils unabhängig einen geradkettigen, cyclischen, verzweigten oder unverzweigten Alkylbeziehungsweise Alkoxy- beziehungsweise Alkylen beziehungsweise Alkenylen-Rest, der gegebenenfalls weiter durch C₁-C₄-Alkoxy weiter substituiert sein kann. Gleiches gilt für den nichtaromatischen Teil eines Arylalkyl-Restes.

C₁-C₄-Alkyl steht beispielsweise für Methyl, Ethyl, n-Propyl, iso-Propyl, n-Butyl, sec.-Butyl und tert.-Butyl, C₁-C₈-Alkyl darüber hinaus beispielsweise für n-Pentyl, 1-Methylbutyl, 2-Methylbutyl, 3-Methylbutyl, neo-Pentyl, 1-Ethylpropyl, cyclo-Hexyl, cyclo-Pentyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, 1-Ethyl-2-methylpropyl, n-Heptyl und n-Octyl, C₁-C₁₂-Alkyl weiter darüber hinaus beispielsweise für Adamantyl, die isomeren Menthyle, n-Nonyl, n-Decyl und n-Dodecyl, C₁-C₁₈-Alkyl noch weiter darüber hinaus beispielsweise für n-Octadecyl.

C₁-C₄-Alkoxy steht beispielsweise für Methoxy, Ethoxy, n-Propoxy, iso-Propoxy, n-Butoxy, sec.-Butoxy und tert.-Butoxy, C₁-C₈-Alkoxy darüberhinaus für n-Pentoxy, 1-Methylbutoxy, 2-Methylbutoxy, 3-Methylbutoxy, neo-Pentoxy, 1-Ethylpropoxy, cyclo-Hexoxy, cyclo-Pentoxy, n-Hexoxy und n-Octoxy, C₁-C₁₂Alkoxy weiter darüber hinaus beispielsweise für Adamantoxy, die isomeren Menthoxy-Reste, n-Decoxy und n-Dodecoxy.

C₁-C₈-Alkylen steht beispielsweise für Methylen, 1,1-Ethylen, 1,2-Ethylen, 1,1-Propylen, 1,3-Propylen, 1,4-Butylen, 1,2-cyclo-Hexoxylen und 1,2-cyclo-Pentylen.

**Halogenalkyl** bedeutet jeweils unabhängig einen geradkettigen, cyclischen, verzweigten oder unverzweigten Alkyl-Rest, der einfach, mehrfach oder vollständig durch Chlor- oder Fluoratome substituiert ist.

Beispielsweise steht C₁-C₈-Halogenalkyl für Trifluormethyl, Chlordifluormethyl, 2,2,2-Trifluorethyl, Pentafluorethyl, Nonafluorbutyl, Heptafluorisopropyl, und Perfluoroctyl.

**Aryl** steht jeweils unabhängig für einen heteroaromatischen Rest mit 5 bis 18 Gerüstkohlenstoffatomen, in denen keines, ein, zwei oder drei Gerüstkohlenstoffatome pro Cyclus, im gesamten Molekül mindestens jedoch ein Gerüstkohlenstoffatom, durch Heteroatome, ausgewählt aus der Gruppe Stickstoff, Schwefel oder Sauerstoff, substituiert sein können, oder und vorzugsweise jedoch für einen carbocyclischen aromatischen Rest mit 6 bis 18 Gerüstkohlenstoffatomen.

Beispiele für carbocyclische aromatische Reste mit 6 bis 18 Gerüstkohlenstoffatomen sind Phenyl, Naphtyl, Phenanthrenyl, Anthracenyl oder Fluorenyl, heteroaromatische Reste mit 5 bis 14 Gerüstkohlenstoffatomen in denen keines, ein, zwei oder drei Gerüstkohlenstoffatome pro Cyclus, im gesamten Molekül mindestens jedoch ein Gerüstkohlenstoffatom, durch Heteroatome, ausgewählt aus der Gruppe Stickstoff, Schwefel oder Sauerstoff, substituiert sein können, sind beispielsweise Pyridinyl, Oxazolyl, Imidazolyl, Benzofuranyl, Dibenzofuran-yl oder Chinolinyl.

Weiterhin kann der carbocyclische aromatische Rest oder heteroaromatische Rest mit bis zu fünf gleichen oder verschiedenen Substituenten pro Cyclus substituiert sein, die ausgewählt sind aus der Gruppe freies oder geschütztes Hydroxy, Cyano, Chlor, Fluor, C₁-C₁₂-Alkyl, C₁-C₁₂-Halogenalkyl, CO(C₁-C₁₂-Alkyl), COO(C₁-C₁₂-Alkyl), CO(C₅-C₁₈-Aryl), COO(C₅-C₁₈-Aryl), CON(C₁-C₁₂₋Alkyl)₂, C₅-C₁₈-Aryl, C₁-C₁₂-Alkoxy, C₁-C₁₂-Halogenalkoxy, Di(C₁-C₈-alkyl)amino oder Tri(C₁₋C₈-alkyl)siloxyl.

**Arylalkyl** bedeutet jeweils unabhängig einen geradkettigen, cyclischen, verzweigten oder unverzweigten Alkyl-Rest nach vorstehender Definition, der einfach, mehrfach oder vollständig durch Aryl-Reste gemäß vorstehender Definition substituiert sein kann.

Im Folgenden werden die bevorzugten Substitutionsmuster definiert:
- G: steht bevorzugt für einen 1,2-Ethandiyl- oder 1,2-Ethendiyl-Rest, der gegebenenfalls einfach oder mehrfach durch C₁-C₈-Alkyl substituiert ist, besonders bevorzugt für einen 1,2-Ethendiyl-Rest.
- B': steht bevorzugt für den Fall, dass n = 1 ist für C₅-C₁₈-Heteroaryl oder für C₁-C₁₈-Alkyl, das eines oder mehrere Heteroatome aus der Gruppe Sauerstoff, Stickstoff oder Schwefel enthält und für den Fall, dass n = 2 oder 3 ist für C₁-C₁₈-Alkyl, C₆-C₁₁-Aralkyl oder C₆₋C₁₀-Aryl.
- B¹: steht besonders bevorzugt für den Fall, dass n = 1 ist für Pyridinyl, Oxazolyl, Imidazolylalkyl, Benzofuranyl, Furanyl, Chinolinyl, Piperidinyl, Pyrrolidinyl, Tetrahydrothiophen-yl oder Tetrahydrofuranyl, wobei die genannten Reste gegebenenfalls durch C₁₋C₁₂-Alkyl, C₁-C₁₂-Halogenalkyl oder C₁-C₈-Alkoxy substituiert sein können oder für den Fall, dass n = 2 ist.
- B²: steht bevorzugt für den Fall, dass n = 1 ist für C₅-C₁₈-Heteroaryl oder für C₁-C₁₈-Alkyl, das eines oder mehrere Heteroatome aus der Gruppe Sauerstoff, Stickstoff oder Schwefel enthält und für den Fall, dass n = 2 oder 3 ist für einen di-valenten Rest aus der Gruppe (C₁-C₈-Alkylen)-(C₅-C₁₉-Aryl)-(Alkylen-C₁-C₈), (C₁-C₈-Alkylen)-(C₅-C₁₉-Arylen), C₂-C₈-Alkylen, C₂-C₈-Alkenylen, C₅-C₁₉-Arylen, C₁₀-C₃₈-Bisarylen und C₄-C₁₈₋Alkylen, das eines oder mehrere Heteroatome aus der Gruppe Sauerstoff, Stickstoff oder Schwefel enthält.
- B²: steht besonders bevorzugt für den Fall, dass n = 1 ist für Pyridinyl, Oxazolyl, Imidazolylalkyl, Benzofuranyl, Furanyl, Chinolinyl, Piperidinyl, Pyrrolidinyl, Tetrahydrothiophen-yl oder Tetrahydrofuranyl, wobei die genannten Reste gegebenenfalls durch C₁-C₁₂-Alkyl, C₁-C₁₂-Halogenalkyl oder C₁-C₈-Alkoxy substituiert sein können oder für den Fall, dass n = 2 ist für einen di-valenten Rest aus der Gruppe 1,1-(C₁-C₄-Alkylen)-(C₅-C₁₉-Arylen)-1,1-(Alkylen-C₁-C₄), 1,1-(C₁-C₄-Alkylen)-(Piperidindiyl)-1,1-(Alkylen-C₁-C₄), 1,1-(C₁₋C₄-Alkylen)-(Pyrrolidindiyl)-1,1-(Alkylen-C₁-C₄), 1, 1-(C₁-C₄-Alkylen)-(C₅-C₁₉₋Arylen), C₂-C₄-Alkylen, C₂-C₄-Alkenylen, C₅-C₁₁-Arylen oder C₁₀-C₂₂-Bisarylen.
- B²: steht ganz besonders bevorzugt für den Fall, dass n = 1 ist für 2-Pyridinyl, 2-Piperidinylalkyl, 2-Pyrrolidinyl, 2-Tetrahydrothiophen-yl oder 2-Tetrahydrofuranyl, wobei die genannten Reste gegebenenfalls durch C₁-C₄-Alkyl substituiert sein können und noch weiter bevorzugt für 2-Pyridinyl oder für den Fall, dass n = 2 ist für einen di-valenten Rest aus der Gruppe 2,6-di-1,1-(C₁-C₄-Alkylen)-pyridin und 2,6-di-1,1-(C₁-C₄-Alkylen)-benzol, wobei die genannten Reste gegebenenfalls durch C₁-C₄-Alkylreste weiter substituiert sein können.
- n: steht bevorzugt für 1 oder 2.

Besonders bevorzugte Katalysatoren enthaltend Kupferkomplexe enthaltend Verbindungen der Formel (I) sind solche der Formel (Ia), 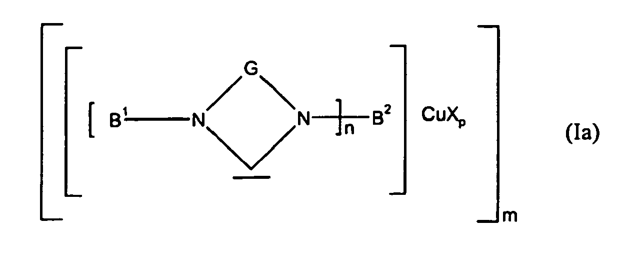 in der
- n, G, B¹ und B²: die vorstehend genannten Bedeutungen und Vorzugsbereiche besitzen und
- X: für Halogenid, (C₁-C₈-Halogenalkyl)carboxylat, (C₁-C₈-Alkyl)carboxylat, (C₁-C₈₋Halogenalkyl)sulfonat, (C₅-C₁₈-Aryl)sulfonat, Cyanid, gegebenenfalls fluoriertes Acetylacetonat, Nitrat, Oxinat, Phosphat, Carbonat, Hexafluorophosphat, Tetraphenylborat, Tetrakis(pentafluorphenyl)borat oder Tetrafluoroborat, bevorzugt für Chlorid, Bromid, Iodid, Trifluoracetat, Acetat, Propionat, Methansulfonat, Trifluormethansulfonat, Nonafluorbutansulfonat, Tosylat, Acetylacetonat, Nitrat, Hexafluorophosphat oder Tetrafluoroborat und besonders bevorzugt für Chlorid, Bromid, Iodid steht und
- p: für 0, 1 oder 2, bevorzugt für 2 und
- m: für 1, 2, 3, 4, 5 oder 6, bevorzugt für 1 oder 2 steht.

Gegebenenfalls können die erfindungsgemäßen Kupferkomplexe enthaltend Katalysatoren auch in Form von Salzaddukten auftreten, die von der Erfindung natürlich ebenfalls umfasst sind.

Ganz besonders bevorzugte Katalysatoren enthaltend Kupferkomplexe enthaltend Liganden der Formel (I) sind:

[(N,N-Dipyridyl-imidazolyliden)-Kupfer-dibromid], [2,6-{Bis-N-(N-methylimidazolyliden)methyl)-pyridin}-Kupfer-dibromid] und [1,3-{Bis-N-(N-methylimidazolyliden)methyl)-5-methylbenzol}-Kupfer-dibromid].

Die erfindungsgemäßen Katalysatoren enthaltend Kupferkomplexe enthaltend Liganden der Formel (I) können beispielsweise in an sich bekannter Weise durch Umsetzung von Verbindungen der Formel (II) 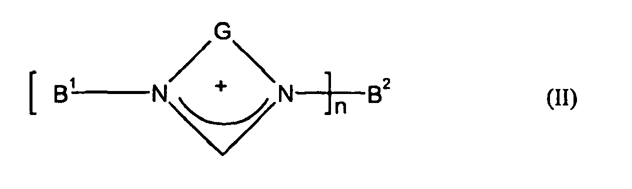 in der
- n, G, B¹ und B²: die unter der Formel (I) genannten Bedeutungen und Vorzugsbereiche besitzen mit Verbindungen der Formel (III)

Cu-Xₚ (III)

in der
- X und p: die in der Formel (Ia) genannten Bedeutungen und Vorzugsbereiche besitzen, hergestellt werden,
wobei die Umsetzung in Gegenwart von oder nach Umsetzung von Verbindungen der Formel (II) mit Base erfolgt.

Als Basen können beispielsweise Erdalkali- oder Alkalimetallhydride, -hydroxide, -amide und/oder -alkoholate sowie Organolithiumverbindungen eingesetzt werden.

In Fällen in denen p = 0 ist kann beispielsweise auch Kupferpulver eingesetzt werden. Bevorzugte Verbindungen der Formel (III) sind:

Kupfer(I)oxid, Kupfer(II)oxid, Kupfer(I)-chlorid, Kupfer(I)-bromid, Kupfer(I)iodid, Kupfer(II)-bromid, Kupfer(II)-chlorid, Kupfer(I)-trifluormethansulfonat, Kupfer(II)-acetat, Kupfer(II)-acetylacetonat oder Mischungen davon.

Das molare Verhältnis von Verbindungen der Formel (II) zu Kupferatomen in Verbindungen der Formel (III) kann bei der Herstellung von Kupferkomplexen enthaltend Liganden der Formel (I) im Allgemeinen 3:1 bis 0,5:1, bevorzugt 2:1 bis 1:1, besonders bevorzugt 1,2:1 bis 1:1 betragen .

Die Kupferkomplexe enthaltend Liganden der Formel (I) können separat in einem dafür geeigneten inerten organischen Lösungsmittel wie beispielsweise Tetrahydrofuran, Diethylether, Toluol, Xylol, Chloroform, Dichlormethan, Methanol und/oder Ethanol hergestellt werden.

Die günstigste Menge an einzusetzendem Lösungsmittel kann durch entsprechende Vorversuche bestimmt werden.

Die Herstellung der Kupferkomplexe enthaltend Liganden der Formel (I) aus den beschriebenen Ausgangsverbindungen der Formeln (II) und (III) erfolgt dann beispielsweise durch Versetzen von Verbindungen der Formel (II) mit Base und Zufügen von Verbindungen der Formel (III).

Die erfindungsgemäßen Kupferkomplexe enthaltend Liganden der Formel (I) eignen sich insbesondere zur katalytischen Knüpfung von Kohlenstoff-Stickstoff-, Kohlenstoff-Sauerstoff- und Kohlenstoff-Schwefel-Bindungen sowie zur Herstellung von Alkinen.

Daher sind von der Erfindung auch Katalysatoren umfasst, die die erfindungsgemäßen Kupferkomplexe enthalten.

Weiterhin ist von der Erfindung auch ein Verfahren zu Herstellung von Verbindungen der Formel (IV) umfasst,

Ar-(F-R²)ₙ (IV)

in der
- n: für 1, 2 oder 3 steht und
- Ar: für einen substituierten oder unsubstituierten aromatischen Rest und
- F: für Sauerstoff, Schwefel, NR³, NR³CO oder Ethindiyl steht, wobei R³ für Wasserstoff, C₁₋C₁₂-Alkyl, C₅-C₁₈-Aryl oder C₆-C₁₉-Arylalkyl steht und
- R²: für Ar, C₁-C₁₂-Alkyl, C₁-C₁₂-Halogenalkyl, C₂-C₁₂-Alkenyl oder C₆-C₁₉-Arylalkyl steht,
das dadurch gekennzeichnet ist, dass Verbindungen der Formel (V)

Ar-Z (V)

in der
- Ar: vorstehend genannte Bedeutung besitzt und
- Z: für Chlor, Brom, Iod, ein Diazoniumsalz oder ein Sulfonat steht
mit Verbindungen der Formel (VI) umgesetzt werden,

H-F-R² (VI)

in der
- F und R²: die vorstehend genannte Bedeutung besitzen und
wobei die Umsetzung in Gegenwart von Base und Katalysatoren enthaltend Kupferkomplexen enthaltend Liganden der Formel (I) erfolgt.

Im Folgenden werden die Vorzugsbereiche für Verbindungen der Formeln (IV) bis (VI) definiert:
- Ar: steht bevorzugt für carbocyclische aromatische Reste mit 6 bis 24 Gerüstkohlenstoffatomen oder für heteroaromatische Reste mit 5 bis 24 Gerüstatomen, in denen keines, ein, zwei oder drei Gerüstatome pro Cyclus, im gesamten Molekül mindestens jedoch ein Gerüstatom Heteroatome sind, die ausgewählt sind aus der Gruppe Stickstoff, Schwefel oder Sauerstoff. Weiterhin können die carbocyclischen aromatischen Reste oder die heteroaromatischen Reste mit bis zu fünf gleichen oder verschiedenen Substituenten pro Cyclus substituiert sein, die ausgewählt sind aus der Gruppe Hydroxy, Chlor, Fluor, Nitro, Cyano, freies oder geschütztes Formyl, C₁-C₁₂-Alkyl, C₅-C₁₄-Aryl, C₆-C₁₅-Arylalkyl, -PO-[(C₁-C₈)-Alkyl]₂, -PO-[(C₅-C₁₄)-Aryl]₂, -PO-[(C₁-C₈)-Alkyl)(C₅-C₁₄)-Aryl)], Tri(C₁-C₈-alkyl)siloxyl oder Resten der Formel (VIIa-f),

A-B-D-E (VIIa)

A-E (VIIb)

A-SO₂-E (VIIc)

A-B-SO₂R⁴ (VIId)

A-SO₃W (VIIe)

A-COW (VIIf)

in denen unabhängig voneinander
- A: fehlt oder für einen C₁-C₈-Alkylenrest steht und
- B: fehlt oder für Sauerstoff, Schwefel oder NR⁴ steht,
wobei R⁴ Wasserstoff, C₁-C₈-Alkyl, C₆-C₁₅-Arylalkyl oder C₅-C₁₄-Aryl bedeutet und
- D: für eine Carbonyl-Gruppe steht und
- E: für R⁵, OR⁵, NHR⁶ oder N(R⁶)₂ steht,
wobei
R⁵ für C₁-C₈-Alkyl, C₆-C₁₅-Arylalkyl, C₁-C₈-Halogenalkyl oder C₅-C₁₄-Aryl und
R⁶ jeweils unabhängig für C₁-C₈-Alkyl, C₆-C₁₅-Arylalkyl oder C₅-C₁₄-Aryl oder N(R⁶)₂ zusammen für einen cyclischen Aminorest steht und
- W: für OH, NH₂, oder OM steht, wobei M ein Alkalimetallion, ein halbes Äquivalent eines Erdalkalimetallions, ein Ammoniumion oder ein organisches Ammoniumion bedeuten kann.
- Ar: steht besonders bevorzugt für Phenyl, Naphtyl, Phenanthrenyl, Anthracenyl, Biphenyl, Binaphthyl, Fluorenyl, Pyridinyl, Oxazolyl, Thiophen-yl, Benzofuranyl, Benzothiophenyl, Dibenzofuran-yl, Dibenzothiophen-yl, Furanyl, Indolyl, Pyridazinyl, Pyrazinyl, Pyrimidinyl, Triazolyl und Chinolinyl, wobei die genannten Reste weiterhin mit keinem, einem, zwei oder drei Resten pro Cyclus weiter substituiert sein können, die jeweils unabhängig voneinander ausgewählt sind aus der Gruppe Fluor, Nitro, Cyano, Di(C₁-C₄₋alkyl)-amino, C₁-C₄-Alkyl, C₅-C₁₀-Aryl, C₁-C₈-Fluoralkyl, C₁-C₈-Fluoralkoxy, C₁-C₈₋Alkoxy, CO(C₁-C₄-Alkyl), COO-(C₁-C₄)-Alkyl, -CON(C₁-C₄-Alkyl)₂.
- Ar: steht ganz besonders bevorzugt für einen Phenyl-Rest, der mit keinem, einem, zwei oder drei Resten weiter substituiert sein kann, die jeweils voneinander unabhängig ausgewählt sind aus der Gruppe Nitro, Fluor, Cyano, C₁-C₄-Alkyl, C₁-C₄-Alkoxy, Trifluormethyl, Trifluormethoxy, CO-(C₁-C₄)-Alkyl, COO-(C₁-C₄)-Alkyl und -CON(C₁-C₄-Alkyl)₂.
- n: steht bevorzugt für 1.
- Z: steht bevorzugt für Chlor, Brom oder Iod.
- F: steht bevorzugt für Sauerstoff, Schwefel, NR³ oder Ethindiyl, wobei R³ für Wasserstoff oder C₁-C₄-Alkyl steht.
- R²: steht bevorzugt für Ar oder C₁-C₁₂-Alkyl.

Für das erfindungsgemäße Verfahren werden die Kupferkomplexe enthaltend Liganden der Formel (I) im Allgemeinen in Mengen von 0,02 Mol-% bis 10 Mol-%, bevorzugt 0,1 Mol-% bis 3 Mol-%, bezogen auf die eingesetzten Verbindungen der Formel (IV), eingesetzt.

Als Base werden im erfindungsgemäßen Verfahren beispielsweise und bevorzugt Alkali- und/oder Erdalkalimetallcarbonate, -hydrogencarbonate, -alkoholate, -phosphate, -fluoride und/oder - hydroxide eingesetzt, wobei insbesondere Kalium- und/oder Natriumcarbonat, Cäsiumcarbonat, Cäsiumhydrogen-carbonat, Natriummethanolat, Kalium-tertiär-butylat, Kaliumamylat, Cäsiumfluorid, Kaliumphosphat und Bariumhydroxid zu nennen sind. Bevorzugt werden Kaliumcarbonat, Natriumcarbonat, Cäsiumcarbonat und/oder Cäsiumhydrogen-carbonat, eingesetzt.

Pro Mol auszutauschendem Hal in Verbindungen der Formel (IV) können beispielsweise 0,05 bis 10 Mol Base eingesetzt werden, bevorzugt 0,3 bis 2 Mol.

Für das erfindungsgemäße Verfahren ist es von Vorteil, wenn die eingesetzten Basen durch Mahlung und/oder Trocknung vorbehandelt werden.

Nach der Mahlung liegen die spezifischen Oberflächen der Basen vorzugsweise bei ca. 0,1 bis 10 m²/g, besonders bevorzugt bei 0,2 bis 1m²/g (BET).

Aufgrund der ausgeprägten hygroskopischen Eigenschaften der im erfindungsgemäßen Verfahren eingesetzten Basen, neigen vor allem die Phosphate und Carbonate zur mehr oder minder starken Aufnahme atmosphärischer Bestandteile, wie Wasser und Kohlendioxid. Ab einer Aufnahme von ca. 30 Gewichtsprozent an atmosphärischen Bestandteilen ist ein deutlicher Einfluss auf die zu erreichenden Umsätze feststellbar. Daher ist neben der Mahlung häufig auch eine Trocknung der Basen angezeigt.

Die Trocknung der Basen erfolgt dabei je nach Natur der verwendeten Base beispielsweise derart, dass unter vermindertem Druck von ca. 0,01 bis 100 mbar für mehrere Stunden auf Temperaturen von ca. 50 bis 200°C, bevorzugt 100 bis 160°C, erhitzt wird.

Das molare Verhältnis von Verbindungen der Formel (VI) zu Verbindungen der Formel (IV) kann beispielsweise 0,8 bis 10 betragen, bevorzugt 1 bis 6 und besonders bevorzugt 1,1 bis 4.

Das erfindungsgemäße Verfahren kann beispielsweise bei Temperaturen von 20 bis 250°C, bevorzugt bei 100 bis 200°C durchgeführt werden. Die optimalen Reaktionstemperaturen hängen dabei insbesondere von der Art der Ausgangsprodukte, des Katalysators und der eingesetzten Basen ab und lassen sich durch einfache Vorversuche ermitteln.

Das erfindungsgemäße Verfahren kann sowohl in Anwesenheit als auch in Abwesenheit eines geeigneten Lösungsmittels durchgeführt werden. Als Lösungsmittel kommen beispielsweise aliphatische, alicyclische oder aromatische Kohlenwasserstoffe, wie beispielsweise Benzin, Benzol, Toluol, Xylol, Petrolether, Hexan, Cyclohexan; Ether, wie Diethylether, Diisopropylether, Dioxan, Tetrahydrofuran oder Ethylenglykoldimethyl- oder -diethylether; Amide wie beispielsweise N,N-Dimethylformamid, N,N-Dimethylacetamid, N-Methylformanilid, N-Methylpyrrolidon oder Hexamethylphosphorsäuretriamid; Ester, wie Essigsäuremethylester oder Essigsäureethylester oder Mischungen solcher Lösungsmittel in Frage.

Gegebenenfalls kann auch ein Überschuss an Verbindungen der Formel (VI) als Reaktionsmedium dienen.

Dem erfindungsgemäßen Verfahren kann gegebenenfalls ein Schleppmittel zugesetzt werden, das gegebenenfalls bei der Reaktion entstehendes Wasser bei der Destillation kontinuierlich azeotrop entfernt.

Die Durchführung des erfindungsgemäßen Verfahrens kann nach üblichen Methoden in kontinuierlicher oder diskontinuierlicher Weise erfolgen.

Der Vorteil vorliegender Erfindung ist insbesondere die leichte Herstellung der Kupferkomplexe enthaltend Liganden der Formel (I) und die hohe Effizienz mit der die erfindungsgemäßen Kupferkomplexe zur Herstellung von Verbindungen der Formel (VI) eingesetzt werden können.

### Beispiele

Herstellung von Kupferkomplexen enthaltend Liganden der Formel (I)

### Beispiel 1

Herstellung von [1,3-{Bis-N-(N-methylimidazolyliden)methyl)-5-methylbenzol}- Kupfer-dibromid] x 2 KBr

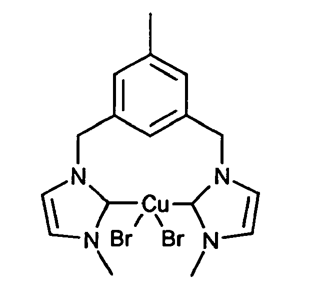

Unter Argonatmosphäre wird 1,3-{Bis-N-(N-methylimidazolium)methyl)-5-methylbenzoldichlorid (135mg, 0,31 mmol) in 10 ml Toluol gelöst und bei 0°C mit Kalium-tert-butylat (71 mg, 0,63 mmol) versetzt. Nach 2 h wird Kupfer-II-bromid (70 mg, 0,31 mmol) zugesetzt und weitere 12 h gerührt. Anschließend wird das Lösungsmittel im Vakuum entfernt, das Produkt fällt als helles Pulver an.

FD/MS: 343 (M-2Br, Hauptkomponente), 423 (M-Br), 503 (M+2H)

### Beispiel 2

Herstellung von [2,6-{Bis-N-(N-methylimidazolyliden)methyl)-pyridin}-Kupfer-dibromid] x 2 KBr

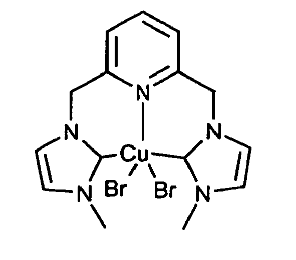

Unter Argonatmosphäre wird 2,6-{Bis-N-(N-methylimidazolium)methyl)-pyridinium-trichlorid (131mg, 0,31 mmol) in 10 ml Toluol gelöst und bei 0°C mit Kalium-tert-butylat (71 mg, 0,63 mmol) versetzt. Nach 2 h wird Kupfer-II-bromid (70 mg, 0,31 mmol) zugesetzt und weitere 12 h gerührt. Anschließend wird das Lösungsmittel im Vakuum entfernt, das Produkt fällt als helles Pulver an.

FD/MS: 330 (M-2Br, Hauptkomponente), 410 (M-Br), 490 (M+2H)

### Beispiel 3

Herstellung von [(N,N-Dipyridyl-imidazolyliden)-Kupfer-dibromid] x 2 KBr

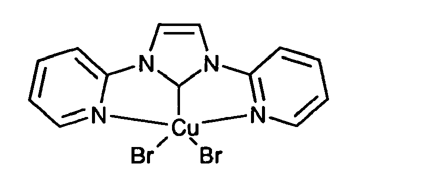

Unter Argonatmosphäre wird [(N,N-Dipyridyl-imidazolium)chlorid (92 mg, 0,31 mmol) in 10 ml Toluol gelöst und bei 0°C mit Kalium-tert-butylat (36 mg, 0,31 mmol) versetzt. Nach 2 h wird Kupfer-II-bromid (70 mg, 0,31 mmol) zugesetzt und weitere 12 h gerührt. Anschließend wird das Lösungsmittel im Vakuum entfernt, das Produkt fällt als helles Pulver an.

FD/MS: 364 (M-Br, Hauptkomponente).

### Beispiele 4 bis 30

Kupplungen unter Verwendung der Katalysatoren aus den Beispielen 1 bis 3

### Beispiel 4

Kupplung von 3-Jodtrifluormethylbenzol mit n-Octanthiol

### (Katalysator aus Beispiel 1)

1,8 g (6,7 mmol) 3-Jodtrifluormethylbenzol, 1,0 g (6,7 mmol) n-Octanthiol, 1,4 g (10,1 mmol) Cäsiumcarbonat und 500 mg (0,7 mmol) des Katalysators aus Beispiel 1 werden in 50 ml Dioxan unter Argonatmosphäre 12 h bei 110°C gerührt. Die Reaktionslösung wird anschließend mit 40 ml wässrigem Ammoniak versetzt, mit Essigsäureethylester extrahiert und die vereinigten organischen Extrakte im Vakuum getrocknet. Nach säulenchromatographischer Aufarbeitung (Hexan) werden 390 mg (20 %) Produkt erhalten.

### Beispiel 5

Kupplung von p-Bromacetophenon mit n-Octanthiol

### (Katalysator aus Beispiel 1)

1,35 g (6,7 mmol) p-Bromacetophenon, 1,0 g (6,7 mmol) n-Octanthiol, 1,4 g (10,1 mmol) Cäsiumcarbonat und 500 mg (0,7 mmol) des Katalysators aus Beispiel 1 werden in 50 ml Dioxan unter Argonatmosphäre 12 h bei 110°C gerührt. Die Reaktionslösung wird anschließend mit 40 ml wässrigem Ammoniak versetzt, mit Essigsäureethylester extrahiert und die vereinigten organischen Extrakte im Vakuum getrocknet. Nach säulenchromatographischer Aufarbeitung (Hexan) werden 800 mg (45 %) Produkt erhalten.

GC-MS/EI: 264 (M)

### Beispiel 6

Kupplung von 3-Jodtrifluormethylbenzol mit Thiophenol

### (Katalysator aus Beispiel 1)

3,6 g (13,5 mmol) 3-Jodtrifluormethylbenzol, 1,5 g (13,5 mmol) Thiophenol, 2,8 g (20,2 mmol) Cäsiumcarbonat und 1,0 g (1,4 mmol) des Katalysators aus Beispiel 1 werden in 100 ml Dioxan unter Argonatmosphäre 12 h bei 110°C gerührt. Die Reaktionslösung wird anschließend mit 50 ml wässrigem Ammoniak versetzt, mit Essigsäureethylester extrahiert und die vereinigten organischen Extrakte im Vakuum getrocknet. Nach säulenchromatographischer Aufarbeitung (Hexan) werden 1,37 g (40 %) Produkt erhalten.

GC-MS/EI: 254 (M)

### Beispiel 7

Kupplung von p-Bromacetphenon mit Thiophenol (Katalysator aus Beispiel 1)

1,3 g (6,7 mmol) p-Bromacetophenon, 0,75 g (6,7 mmol) Thiophenol, 1,8 g (13,5 mmol) Kaliumcarbonat und 500 mg (0,7 mmol) des Katalysators aus Beispiel 1 werden in 50 ml Dioxan unter Argonatmosphäre 12 h bei 110°C gerührt. Die Reaktionslösung wird anschließend mit 20 ml wässrigem Ammoniak versetzt, mit Essigsäureethylester extrahiert und die vereinigten organischen Extrakte im Vakuum getrocknet. Nach säulenchromatographischer Aufarbeitung (Hexan) werden 840 mg (55 %) Produkt erhalten.

GC-MS/EI: 228 (M)

### Beispiel 8

Kupplung von p-Chlornitrobenzol mit Thiophenol

### (Katalysator aus Beispiel 1)

2,1 g (13,5 mmol) p-Chlornitrobenzol, 1,5 g (13,5 mmol) Thiophenol, 2,8 g (20,2 mmol) Cäsiumcarbonat und 1,0 g (1,4 mmol) des Katalysators aus Beispiel 1 werden in 100 ml Dioxan unter Argonatmosphäre 12 h bei 110°C gerührt. Die Reaktionslösung wird anschließend mit 50 ml wässrigem Ammoniak versetzt, mit Essigsäureethylester extrahiert und die vereinigten organischen Extrakte im Vakuum getrocknet. Nach säulenchromatographischer Aufarbeitung (Hexan) werden 1,77 g (57 %) Produkt erhalten.

GC-MS/EI: 228 (M)

### Beispiel 9

Kupplung von 3-Jodtrifluormethylbenzol mit o-Hydroxypyridin

### (Katalysators aus Beispiel 1)

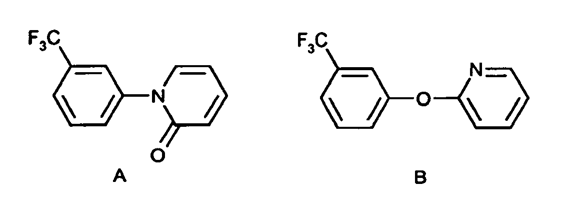

5,7 g (21 mmol) 3-Jodtrifluormethylbenzol, 1,0 g (11 mmol) o-Hydroxypyridin, 2,9 g (21 mmol) Kaliumcarbonat und 1,0 g (1,4 mmol) des Katalysators aus Beispiel 1 werden in 100 ml Dioxan unter Argonatmosphäre 12 h bei 110°C gerührt. Die Reaktionslösung wird anschließend mit 80 ml wässrigem Ammoniak versetzt, mit Essigsäureethylester extrahiert und die vereinigten organischen Extrakte im Vakuum getrocknet. Nach säulenchromatographischer Aufarbeitung (Hexan) werden 1,0 g (40 %) eines Produktgemisches von A und B erhalten.

MS/CI: 238 (M)

### Beispiel 10

Kupplung von 3-Jodtrifluormethylbenzol mit Methanol (Katalysator aus Beispiel 1)

1,8 g (6,7 mmol) 3-Jodtrifluormethylbenzol, 2 ml (20 mmol) Essigsäureethylester, 17,5 ml einer 30 %igen Natriummethylatlösung und 500 mg (0,7 mmol) des Katalysators aus Beispiel 1 werden unter Argonatmosphäre 12 h refluxiert. Die Reaktionslösung wird anschließend vorsichtig hydrolysiert, mit Dichlormethan extrahiert und die vereinigten organischen Extrakte im Vakuum getrocknet. Nach säulenchromatographischer Aufarbeitung (Hexan) wurde das Produkt in 1,11 g (95 %) erhalten.

GC-MS/EI: 176 (M)

### Beispiel 11

Kupplung von p-Bromacetophenon mit Methanol

### (Katalysator aus Beispiel 1)

2,7 g (13,5 mmol) p-Bromacetophenon, 4 ml (40 mmol) Essigsäureethylester, 35 ml einer 30 %igen Natriummethylatlösung und 1,0 g (1,4 mmol) des Katalysators aus Beispiel 1 werden unter Argonatmosphäre 12 h refluxiert. Die Reaktionslösung wird anschließend vorsichtig hydrolysiert, mit Dichlormethan extrahiert und die vereinigten organischen Extrakte im Vakuum getrocknet. Im GC sind neben dem Produkt mit hohem Anteil Fragmente des Aldol-Nebenproduktes zu sehen. Nach säulenchromatographischer Aufarbeitung (Hexan) wurde das Produkt in 800 mg (40 %) neben einigen Nebenprodukten erhalten.

GC-MS/EI: 150 (M)

### Beispiel 12

Kupplung von p-Bromtoluol mit Methanol

### (Katalysator aus Beispiel 1)

2,3 g (13,5 mmol) p-Bromtoluol, 4 ml (40 mmol) Essigsäureethylester, 35 ml einer 30 %igen Natriummethylatlösung und 1,0 g (1,4 mmol) des Katalysators aus Beispiel 1 werden unter Argonatmosphäre 12 h refluxiert. Die Reaktionslösung wird anschließend vorsichtig hydrolysiert, mit Dichlormethan extrahiert und die vereinigten organischen Extrakte im Vakuum getrocknet. Nach säulenchromatographischer Aufarbeitung (Hexan) wurde das Produkt in 1,5 g (90 %) erhalten.

### Beispiel 13

Kupplung von p-Chlornitrobenzol mit Methanol

### (Katalysator aus Beispiel 1)

2,1 g (13,5 mmol) p-Chlornitrobenzol, 4 ml (40 mmol) Essigsäureethylester, 35 ml einer 30 %igen Natriummethylatlösung und 1,0 g (1,4 mmol) des Katalysators aus Beispiel 1 werden unter Argonatmosphäre 12 h refluxiert. Die GC-Analyse des Rohproduktes zeigt die Produktbildung (GC-MS/EI: 153 (M)) mit 70 % Umsatz an.

### Beispiel 14

Kupplung von 3-Jodtrifluormethylbenzol mit Phenylacetylen (Katalysator aus Beispiel 1)

2,7 g (10 mmol) 3-Jodtrifluormethylbenzol, 1,3 g (12,5 mmol) Phenylacetylen, 2,2 g (20 mmol) Kalium-tert-butylat und 500 mg (0,7 mmol) des Katalysators aus Beispiel 1 werden in 100 ml Dioxan unter Argonatmosphäre 21 h bei 110°C gerührt. Die Reaktionslösung wird filtriert und im Vakuum getrocknet. Nach säulenchromatographischer Aufarbeitung (Hexan) werden 1,92 g (78 %) Produkt erhalten.

GC-MS/EI: 246 (M)

### Beispiel 15

Kupplung von p-Bromacetophenon mit n-Octanthiol (Katalysator aus Beispiel 2)

1,35 g (6,7 mmol) p-Bromacetophenon, 1,0 g (6,7 mmol) n-Octanthiol, 1,8 g (13,5 mmol) Kaliumcarbonat und 490 mg (0,7 mmol) des Katalysators aus Beispiel 2 werden in 50 ml Dioxan unter Argonatmosphäre 12 h bei 110°C gerührt. Die Reaktionslösung wird anschließend mit 40 ml wässrigem Ammoniak versetzt, mit Essigsäureethylester extrahiert und die vereinigten organischen Extrakte im Vakuum getrocknet. Nach säulenchromatographischer Aufarbeitung (Hexan) werden 1,33 g (75 %) Produkt erhalten.

### Beispiel 16

Kupplung von p-Bromacetophenon mit n-Octanthiol

### (Katalysator aus Beispiel 3)

1,35 g (6,7 mmol) p-Bromacetophenon, 1,0 g (6,7 mmol) n-Octanthiol, 1,8 g (13,5 mmol) Kaliumcarbonat und 380 mg (0,7 mmol) des Katalysators aus Beispiel 3 werden in 50 ml Dioxan unter Argonatmosphäre 12 h bei 110°C gerührt. Die Reaktionslösung wird anschließend mit 40 ml wässrigem Ammoniak versetzt, mit Essigsäureethylester extrahiert und die vereinigten organischen Extrakte im Vakuum getrocknet. Nach säulenchromatographischer Aufarbeitung (Hexan) werden 880 mg (50 %) Produkt erhalten.

### Beispiel 17

Kupplung von p-Bromacetphenon mit Thiophenol (Katalysator aus Beispiel 2)

1,35 g (6,7 mmol) p-Bromacetophenon, 0,75 g (6,7 mmol) Thiophenol, 1,8 g (13,5 mmol) Kaliumcarbonat und 490 mg (0,7 mmol) des Katalysators aus Beispiel 2 werden in 50 ml Dioxan unter Argonatmosphäre 12 h bei 110°C gerührt. Die Reaktionslösung wird anschließend mit 20 ml wässrigem Ammoniak versetzt, mit Essigsäureethylester extrahiert und die vereinigten organischen Extrakte im Vakuum getrocknet. Nach säulenchromatographischer Aufarbeitung (Hexan) werden 810 mg (54 %) Produkt erhalten.

### Beispiel 18

Kupplung von p-Bromacetphenon mit Thiophenol (Katalysator aus Beispiel 3)

1,35 g (6,7 mmol) p-Bromacetophenon, 0,75 g (6,7 mmol) Thiophenol, 1,8 g (13,5 mmol) Kaliumcarbonat und 380 mg (0.7 mmol) des Katalysators aus Beispiel 3 werden in 50 ml Dioxan unter Argonatmosphäre 12 h bei 110°C gerührt. Die Reaktionslösung wird anschließend mit 20 ml wässrigem Ammoniak versetzt, mit Essigsäureethylester extrahiert und die vereinigten organischen Extrakte im Vakuum getrocknet. Nach säulenchromatographischer Aufarbeitung (Hexan) werden 1,3 g (85 %) Produkt erhalten.

### Beispiel 19

Kupplung von p-Bromacetophenon mit Phenol (Katalysator aus Beispiel 2)

1,35 g (6,7 mmol) p-Bromacetophenon, 630 mg (6,7 mmol) Phenol, 1,8 g (13,5 mmol) Kaliumcarbonat und 490 mg (0,7 mmol) des Katalysators aus Beispiel 2 werden in 50 ml Dioxan unter Argonatmosphäre 12 h bei 110°C gerührt. Die Reaktionslösung wird anschließend mit 40 ml wässrigem Ammoniak versetzt, mit Essigsäureethylester extrahiert und die vereinigten organischen Extrakte im Vakuum getrocknet. Nach säulenchromatographischer Aufarbeitung (Hexan) werden 210 mg (15 %) Produkt erhalten.

### Beispiel 20

Kupplung von p-Bromacetophenon mit o-Hydroxypyridin (Katalysator aus Beispiel 3)

1,35 g (6,7 mmol) p-Bromacetophenon, 650 mg (6,7 mmol) o-Hydroxypyridin, 1,8 g (13,5 mmol) Kaliumcarbonat und 380 mg (0,7 mmol) des Katalysators aus Beispiel 3 werden in 50 ml Dioxan unter Argonatmosphäre 12 h bei 110°C gerührt. Die Reaktionslösung wird anschließend mit 40 ml wässrigem Ammoniak versetzt, mit Essigsäureethylester extrahiert und die vereinigten organischen Extrakte im Vakuum getrocknet. Nach säulenchromatographischer Aufarbeitung (Hexan) werden 880 mg (62 %) eines Produktgemisches von A und B (Verhältnis 9:1) erhalten.

### Beispiel 21

Kupplung von p-Bromacetophenon mit Methanol (Katalysator aus Beispiel 2)

1,34 g (13,5 mmol) p-Bromacetophenon, 2 ml (20 mmol) Essigsäureethylester, 17,5 ml einer 30 %igen Natriummethylatlösung und 490 mg (0,7 mmol) des Katalysators aus Beispiel 2 werden unter Argonatmosphäre 12 h refluxiert. Die Reaktionslösung wird anschließend vorsichtig hydrolysiert, mit Dichlormethan extrahiert und die vereinigten organischen Extrakte im Vakuum getrocknet. Im GC sind neben dem Produkt (35 %) mit hohem Anteil Fragmente des Aldol-Nebenproduktes zu sehen.

### Beispiel 22

Kupplung von p-Bromacetophenon mit Methanol (Katalysator aus Beispiel 3)

1,34 g (13,5 mmol) p-Bromacetophenon, 2 ml (20 mmol) Essigsäureethylester, 17,5 ml einer 30 %igen Natriummethylatlösung und 380 mg (0,7 mmol) des Katalysators aus Beispiel 3 werden unter Argonatmosphäre 12 h refluxiert. Die Reaktionslösung wird anschließend vorsichtig hydrolysiert, mit Dichlormethan extrahiert und die vereinigten organischen Extrakte im Vakuum getrocknet. Im GC sind neben dem Produkt (40 %) mit hohem Anteil Fragmente des Aldol-Nebenproduktes zu sehen.

### Beispiel 23

Kupplung von 3-Jodtrifluormethylbenzol mit Phenylacetylen (Katalysator aus Beispiel 2)

2,7 g (10 mmol) 3-Jodtrifluormethylbenzol, 1,3 g (12,5 mmol) Phenylacetylen, 2,2 g (20 mmol) Kalium-tert-butylat und 490 mg (0,7 mmol) des Katalysators aus Beispiel 2 werden in 100 ml Dioxan unter Argonatmosphäre 21 h bei 110°C gerührt. Die GC-Analyse des Rohproduktes zeigt die Produktbildung (vgl. mit GC-MS/EI GZN 276-11) mit 72 % Umsatz an.

### Beispiel 24

Kupplung von 3-Jodtrifluormethylbenzol mit Phenylacetylen (Katalysator aus Beispiel 3)

2,7 g (10 mmol) 3-Jodtrifluormethylbenzol, 1,3 g (12,5 mmol) Phenylacetylen, 2,2 g (20 mmol) Kalium-tert-butylat und 380 mg (0,7 mmol) des Katalysators aus Beispiel 3 werden in 100 ml Dioxan unter Argonatmosphäre 21 h bei 110°C gerührt. Die GC-Analyse des Rohproduktes zeigt die Produktbildung mit 70 % Umsatz an.

### Beispiel 25

Kupplung von Brombenzol mit Anilin (Katalysator aus Beispiel 1)

1,05 g (6,7 mmol) Brombenzol, 1,4 g (10,1 mmol) Cäsiumcarbonat und 500 mg (0,7 mmol) des Katalysators aus Beispiel 1 werden in 2 ml Anilin unter Argonatmosphäre 12 h bei 170°C gerührt. Die GC-Analyse des Rohproduktes zeigt die selektive Bildung der monoarylierten Verbindung an, Triarylamin wird nicht detektiert. Nach säulenchromatographischer Aufarbeitung (Hexan) werden 680 mg (60 %) Produkt erhalten.

GC-MS/EI: 169 (M)

### Beispiel 26

Kupplung von Jodbenzol mit Anilin (Katalysators aus Beispiel 1)

1,37 g (6,7 mmol) Jodbenzol, 1,4 g (10,1 mmol) Cäsiumcarbonat und 500 mg (0,7 mmol) des Katalysators aus Beispiel 1 werden in 2 ml Anilin unter Argonatmosphäre 12 h bei 170°C gerührt. Die GC-Analyse des Rohproduktes zeigt die selektive Bildung der monoarylierten Verbindung und vollständige Umsetzung an, Triarylamin wird nicht detektiert.

### Beispiel 27

Kupplung von p-Chlornitrobenzol mit Anilin (Katalysators aus Beispiel 1)

1,06 g (6,7 mmol) p-Chlornitrobenzol, 1,4 g (10,1 mmol) Cäsiumcarbonat und 500 mg (0,7 mmol) des Katalysators aus Beispiel 1 werden in 2 ml Anilin unter Argonatmosphäre 12 h bei 170°C gerührt. Die GC-Analyse des Rohproduktes zeigt die selektive Bildung der monoarylierten Verbindung und 83 % Umsetzung an, Triarylamin wird nicht detektiert. Nach säulenchromatographischer Aufarbeitung werden 1,07 g (75 %) Produkt erhalten.

GC-MS/EI: 214 (M)

### Beispiel 28

Kupplung von Brombenzol mit p-Nitroanilin (Katalysator aus Beispiel 1)

1,05 g (6,7 mmol) Brombenzol, 1,4 g (10,1 mmol) Cäsiumcarbonat und 500 mg (0,7 mmol) des Katalysators aus Beispiel 1 werden mit 3 g Nitroanilin gemischt und unter Argonatmosphäre 12 h bei 170°C gerührt. Die GC-Analyse des Rohproduktes zeigt die selektive Bildung der monoarylierten Verbindung und vollständige Umsetzung an, Triarylamin wird nicht detektiert.

### Beispiel 29

Kupplung von Jodbenzol mit p-Nitroanilin (Katalysator aus Beispiel 1)

1,37 g (6,7 mmol) Jodbenzol, 1,4 g (10,1 mmol) Cäsiumcarbonat und 500 mg (0,7 mmol) des Katalysators aus Beispiel 1 werden mit 3 g Nitroanilin gemischt und unter Argonatmosphäre 12 h bei 170°C gerührt. Die GC-Analyse des Rohproduktes zeigt die selektive Bildung der monoarylierten Verbindung (Vergleich mit GC-MS/EI von 1101-4) und vollständige Umsetzung an, Triarylamin wird nicht detektiert.

### Beispiel 30

Kupplung von Jodbenzol mit p-Isopropylanilin (Katalysator aus Beispiel 1)

1,37 g (6,7 mmol) Jodbenzol, 1,4 g (10,1 mmol) Cäsiumcarbonat und 500 mg (0,7 mmol) des Katalysators aus Beispiel 1 werden in 2 ml p-Isopropylanilin unter Argonatmosphäre 12 h bei 170°C gerührt. Die GC-Analyse des Rohproduktes zeigt die Bildung von monoarylierter und diarylierter Verbindung im Verhältnis 1: 1 und 70 % Umsatz an.

### Beispiel 31

Kupplung von Brombenzol mit Anilin (Katalysator aus Beispiel 2)

1,05 g (6,7 mmol) Brombenzol, 1,4 g (10,1 mmol) Cäsiumcarbonat und 490 mg (0,7 mmol) des Katalysators aus Beispiel 2 werden in 2 ml Anilin unter Argonatmosphäre 12 h bei 170°C gerührt. Die GC-Analyse des Rohproduktes zeigt die selektive Bildung der monoarylierten Verbindung und 33 % Umsetzung an, Triarylamin wird nicht detektiert.

### Beispiel 32

Kupplung von Jodbenzol mit Anilin (Katalysator aus Beispiel 2)

1,37 g (6,7 mmol) Jodbenzol, 1,4 g (10,1 mmol) Cäsiumcarbonat und 490 mg (0,7 mmol) des Katalysators aus Beispiel 2 werden in 2 ml Anilin unter Argonatmosphäre 12 h bei 170°C gerührt. Die GC-Analyse des Rohproduktes zeigt die selektive Bildung der monoarylierten Verbindung und 89 % Umsetzung an, Triarylamin wird nicht detektiert.

### Beispiel 33

Kupplung von p-Chlornitrobenzol mit Anilin (Katalysator aus Beispiel 2)

1,06 g (6,7 mmol) p-Chlornitrobenzol, 1,4 g (10,1 mmol) Cäsiumcarbonat und 490 mg (0,7 mmol) des Katalysators aus Beispiel 2 werden in 2 ml Anilin unter Argonatmosphäre 12 h bei 170°C gerührt. Die GC-Analyse des Rohproduktes zeigt die selektive Bildung der monoarylierten Verbindung und 63 % Umsetzung an, Triarylamin wird nicht detektiert.

### Beispiel 34

Kupplung von Jodbenzol mit Anilin (Katalysator aus Beispiel 3)

1,37 g (6,7 mmol) Jodbenzol, 1,4 g (10,1 mmol) Cäsiumcarbonat und 380 mg (0,7 mmol) des Katalysators aus Beispiel 3 werden in 2 ml Anilin unter Argonatmosphäre 12 h bei 170°C gerührt. Die GC-Analyse des Rohproduktes zeigt die selektive Bildung der monoarylierten Verbindung und vollständige Umsetzung an, Triarylamin wird nicht detektiert.

## Patentansprüche

1. Katalysatoren enthaltend Kupferkomplexe enthaltend Liganden der Formel (I) 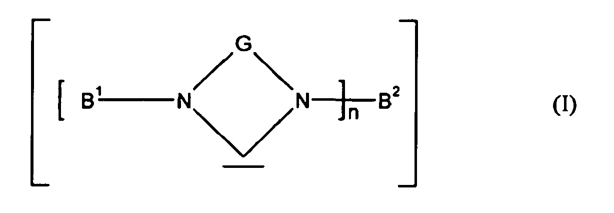 in der
G für einen 1,2-Ethandiyl- oder 1,2-Ethendiyl-Rest steht, der gegebenenfalls einfach oder mehrfach substituiert ist und
B¹ für C₅-C₁₈-Aryl, C₁-C₁₈-Alkyl, das gegebenenfalls eines oder mehrere Heteroatome aus der Gruppe Sauerstoff, Stickstoff oder Schwefel aufweisen kann oder C₆-C₁₉₋Aralkyl und
B² für einen n-valenten Rest mit insgesamt 2 bis 40 Kohlenstoffatomen und
n für 1, 2 oder 3 steht.

2. Katalysatoren nach Anspruch 1, **dadurch gekennzeichnet, dass** G für einen 1,2-Ethandiyl- oder 1,2-Ethendiyl-Rest steht, der gegebenenfalls einfach oder mehrfach durch C₁-C₈-Alkyl substituiert ist.

3. Katalysatoren nach mindestens einem der Ansprüche 1 und 2, **dadurch gekennzeichnet, dass** B¹ für den Fall, dass n = 1 ist für C₅-C₁₈-Heteroaryl oder für C₁-C₁₈-Alkyl steht, das eines oder mehrere Heteroatome aus der Gruppe Sauerstoff, Stickstoff oder Schwefel enthält und für den Fall, dass n = 2 oder 3 ist für C₁-C₁₈-Alkyl, C₆-C₁₁-Aralkyl oder C₆-C₁₀-Aryl steht.

4. Katalysatoren nach mindestens einem der Ansprüche 1 bis 3, **dadurch gekennzeichnet, dass** die Kupferkomplexe solche der Formel (Ia) sind 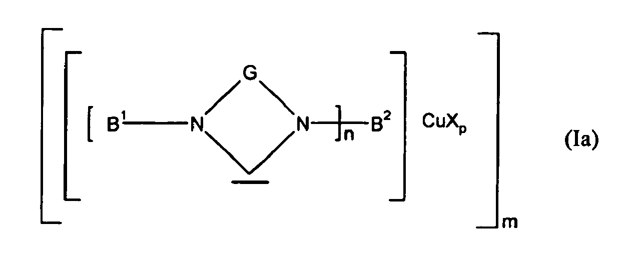 in der
n, G, B¹ und B² die in den vorstehenden Ansprüchen genannten Bedeutungen und Vorzugsbereiche besitzen und
X für Halogenid, (C₁-C₈-Halogenalkyl)carboxylat, (C₁-C₈-Alkyl)carboxylat, (C₁-C₈₋Halogenalkyl)sulfonat, (C₅-C₁₈-Aryl)sulfonat, Cyanid, gegebenenfalls fluoriertes Acetylacetonat, Nitrat, Oxinat, Phosphat, Carbonat, Hexafluorophosphat, Tetraphenylborat, Tetrakis(pentafluorphenyl)borat oder Tetrafluoroborat steht und
p für 0, 1 oder 2 und
m für 1, 2, 3, 4, 5 oder 6 steht.

5. Katalysatoren nach mindestens einem der Ansprüche 1 bis 4, **dadurch gekennzeichnet, dass** die Kupferkomplexe ausgewählt sind aus [(N,N-Dipyridyl-imidazolyliden)-Kupfer-dibromid], [2,6-{Bis-N-(N-methylimidazolyliden)methyl)-pyridin}-Kupfer-dibromid] und [1,3-{Bis-N-(N-methylimidazolyliden)-methyl)-5-methylbenzol}- Kupfer-dibromid].

6. Verwendung von Katalysatoren nach mindestens einem der Ansprüche 1 bis 5 zur katalytischen Knüpfung von Kohlenstoff-Stickstoff-, Kohlenstoff-Sauerstoff und Kohlenstoff-Schwefel-Bindungen sowie zur Herstellung von Alkinen.

7. Verfahren zur Herstellung von Verbindungen der Formel (IV),
Ar-(F-R²)ₙ (IV)
in der
n für 1, 2 oder 3 steht und
Ar für einen substituierten oder unsubstituierten aromatischen Rest und
F für Sauerstoff, Schwefel, NR³, NR³CO oder Ethindiyl steht, wobei R³ für Wasserstoff, C₁-C₁₂-Alkyl, C₅-C₁₈-Aryl oder C₆-C₁₉-Arylalkyl steht und
R² für Ar, C₁-C₁₂-Alkyl, C₁-C₁₂-Halogenalkyl, C₂-C₁₂-Alkenyl oder C₆-C₁₉-Arylalkyl steht,
**dadurch gekennzeichnet, dass** Verbindungen der Formel (V)
Ar-Z (V)
in der
Ar vorstehend genannte Bedeutung besitzt und
Z für Chlor, Brom, Iod , ein Diazoniumsalz oder ein Sulfonat steht
mit Verbindungen der Formel (VI) umgesetzt werden,
H-F-R² (VI)
in der F und R² die vorstehend genannte Bedeutung besitzen und
wobei die Umsetzung in Gegenwart von Base und Katalysatoren gemäß wenigstens einem der Ansprüche 1 bis 5 erfolgt.

8. Verfahren nach Anspruch 7, **dadurch gekennzeichnet, dass** Ar für carbocyclische aromatische Reste mit 6 bis 24 Gerüstkohlenstoffatomen oder für heteroaromatische Reste mit 5 bis 24 Gerüstatomen steht, in denen keines, ein, zwei oder drei Gerüstatome pro Cyclus, im gesamten Molekül mindestens jedoch ein Gerüstatom Heteroatome sind, die ausgewählt sind aus der Gruppe Stickstoff, Schwefel oder Sauerstoff und wobei die carbocyclischen aromatischen Reste oder die heteroaromatischen Reste mit bis zu fünf gleichen oder verschiedenen Substituenten pro Cyclus substituiert sein können, die ausgewählt sind aus der Gruppe Hydroxy, Chlor, Fluor, Nitro, Cyano, freies oder geschütztes Formyl, C₁-C₁₂-Alkyl, C₅-C₁₄₋Aryl, C₆-C₁₅-Arylalkyl, -PO-[(C₁-C₈)-Alkyl]₂, -PO-[(C₅-C₁₄)-Aryl]₂, -PO-[(C₁-C₈)-Alkyl)(C₅₋C₁₄)-Aryl)], Tri(C₁-C₈-alkyl)siloxyl oder Resten der Formel (VIIa-f),
A-B-D-E (VIIa)
A-E (VIIb)
A-SO₂-E (VIIc)
A-B-SO₂R⁴ (VIId)
A-SO₃W (VIIe)
A-COW (VIIf)
in denen unabhängig voneinander
A fehlt oder für einen C₁-C₈-Alkylenrest steht und
B fehlt oder für Sauerstoff, Schwefel oder NR⁴ steht,
wobei R⁴ Wasserstoff, C₁-C₈-Alkyl, C₆-C₁₅-Arylalkyl oder C₅-C₁₄-Aryl bedeutet und
D für eine Carbonyl-Gruppe steht und
E für R⁵, OR⁵, NHR⁶ oder N(R⁶)₂ steht,
wobei R⁵ für C₁-C₈-Alkyl, C₆-C₁₅-Arylalkyl, C₁-C₈-Halogenalkyl oder C₅-C₁₄-Aryl und
R⁶ jeweils unabhängig für C₁-C₈-Alkyl, C₆-C₁₅-Arylalkyl oder C₅-C₁₄-Aryl oder N(R⁶)₂ zusammen für einen cyclischen Aminorest steht und
W für OH, NH₂, oder OM steht, wobei M ein Alkalimetallion, ein halbes Äquivalent eines Erdalkalimetallions, ein Ammoniumion oder ein organisches Ammoniumion bedeuten kann.

9. Verfahren nach mindestens einem der Ansprüche 7 und 8, **dadurch gekennzeichnet, dass** die Kupferkomplexe enthaltend Liganden der Formel (I) in Mengen von 0,02 Mol-% bis 10 Mol % bezogen auf die eingesetzten Verbindungen der Formel (IV) eingesetzt werden.

10. Verfahren nach mindestens einem der Ansprüche 7 bis 9, **dadurch gekennzeichnet, dass** als Base Alkali- und/oder Erdalkalimetallcarbonate, -hydrogencarbonate, -alkoholate,-phosphate, -fluoride und/oder -hydroxide eingesetzt werden.

11. Verfahren nach mindestens einem der Ansprüche 7 bis 10, **dadurch gekennzeichnet, dass** die eingesetzten Basen durch Mahlung und/oder Trocknung vorbehandelt werden.

12. [(N,N-Dipyridyl-imidazolyliden)-Kupfer-dibromid], [2,6-{Bis-N-(N-methylimidazolyliden)methyl)-pyridin}-Kupfer-dibromid] und [1,3-{Bis-N-(N-methylimidazolyliden)methyl)-5-methylbenzol}- Kupfer-dibromid].

13. Kupferkomplexe enthaltend Liganden der Formel (I) 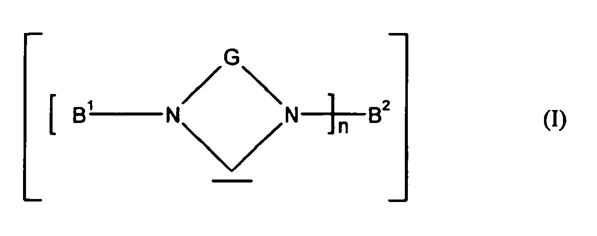 in der
G für einen 1,2-Ethandiyl- oder 1,2-Ethendiyl-Rest steht, der gegebenenfalls einfach oder mehrfach substituiert ist und
B¹ für C₅-C₁₈-Aryl, C₁-C₁₈-Alkyl, das gegebenenfalls eines oder mehrere Heteroatome aus der Gruppe Sauerstoff, Stickstoff oder Schwefel aufweisen kann oder C₆-C₁₉₋Aralkyl und
B² für einen n-valenten Rest mit insgesamt 2 bis 40 Kohlenstoffatomen und
n für 2 oder 3 steht.

## Claims

1. Catalysts comprising copper complexes containing ligands of the formula (I) 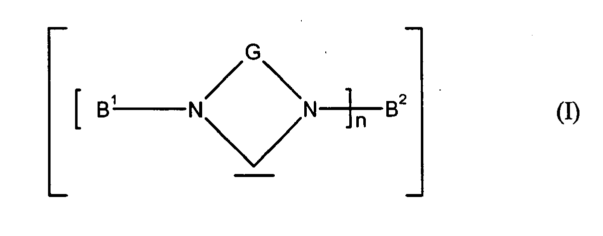 in which
G is a 1,2-ethanediyl or 1,2-ethenediyl radical which is optionally mono- or polysubstituted and
B¹ is C₅-C₁₈-aryl, C₁-C₁₈-alkyl which may optionally have one or more heteroatoms from the group of oxygen, nitrogen or sulphur, or C₆-C₁₉-aralkyl and
B² is an n-valent radical having a total of 2 to 40 carbon atoms and
n is 1, 2 or 3.

2. Catalysts according to Claim 1, **characterized in that** G is a 1,2-ethanediyl or 1,2-ethenediyl radical which is optionally mono- or polysubstituted by C₁-C₈-alkyl.

3. Catalysts according to at least one of Claims 1 and 2, **characterized in that** B¹, in the case that n = 1, is C₅-C₁₈-heteroaryl or C₁-C₁₈-alkyl, each of which contains one or more heteroatoms from the group of oxygen, nitrogen or sulphur, and, in the case that n = 2 or 3, is C₁-C₁₈-alkyl, C₆₋C₁₁-aralkyl or C₆-C₁₀-aryl.

4. Catalysts according to at least one of Claims 1 to 3, **characterized in that** the copper complexes are those of the formula (Ia) 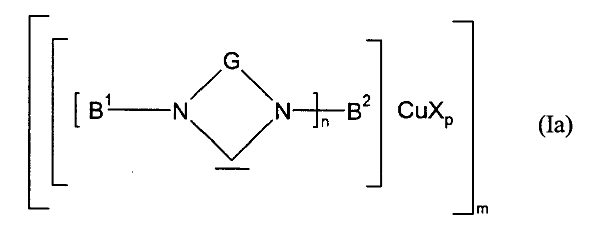 in which
n, G, B¹ und B² have the definitions and areas of preference specified in the preceding claims and
X is halide, (C₁-C₈-haloalkyl)carboxylate, (C₁-C₈-alkyl)carboxylate, (C₁-C₈-haloalkyl)sulphonate, (C₅-C₁₈-aryl)sulphonate, cyanide, optionally fluorinated acetylacetonate, nitrate, oxinate, phosphate, carbonate, hexafluorophosphate, tetraphenylborate, tetrakis(pentafluorophenyl)borate or tetrafluoroborate and
p is 0, 1 or 2 and
m is 1, 2, 3, 4, 5 or 6.

5. Catalysts according to at least one of Claims 1 to 4, **characterized in that** the copper complexes are selected from [(N,N-Dipyridylimidazolylidene)copper dibromide], [2,6-{bis-N-(N-methylimidazolylidene)methyl)pyridine}copper dibromide] and [1,3-{bis-N-(N-methylimidazolylidene)methyl)-5-methylbenzene} copper dibromide].

6. Use of catalysts according to at least one of Claims 1 to 5 for catalytically forming carbon-nitrogen, carbon-oxygen and carbon-sulphur bonds, and also for preparing alkynes.

7. Process for preparing compounds of the formula (IV),
Ar-(F-R²)ₙ (IV)
in which
n is 1, 2 or 3 and
Ar is a substituted or unsubstituted aromatic radical and
F is oxygen, sulphur, NR³, NR³CO or ethinediyl, where R³ is hydrogen, C₁-C₁₂-alkyl, C₅-C₁₈-aryl or C₆-C₁₉-arylalkyl and
R² is Ar, C₁-C₁₂-alkyl, C₁-C₁₂-haloalkyl, C₂-C₁₂-alkenyl or C₆-C₁₉-arylalkyl,
**characterized in that** compounds of the formula (V)
Ar-Z (V)
in which
Ar is as defined above and
Z is chlorine, bromine, iodine, a diazonium salt or a sulphonate
are reacted with compounds of the formula (VI)
H-F-R² (VI)
in which F and R² are each as defined above and
the conversion is effected in the presence of base and catalysts according to at least one of Claims 1 to 5.

8. Process according to Claim 7, **characterized in that** Ar is a carbocyclic aromatic radical having 6 to 24 framework carbon atoms or a heteroaromatic radical having 5 to 24 framework atoms, of which no, one, two or three framework atoms per cycle, but at least one framework atom in the entire molecule, are heteroatoms which are selected from the group of nitrogen, sulphur or oxygen, and the carbocyclic aromatic radicals or the heteroaromatic radicals may be substituted by up to five identical or different substituents per cycle which are selected from the group of hydroxyl, chlorine, fluorine, nitro, cyano, free or protected formyl, C₁-C₁₂₋alkyl, C₅-C₁₄-aryl, C₆-C₁₆-arylalkyl, -PO-[(C₁-C₈)alkyl]₂, -PO-[(C₅₋C₁₄)aryl]₂, -PO-[(C₁-C₈)alkyl)(C₅-C₁₄)aryl)], tri(C₁-C₈-alkyl)siloxyl or radicals of the formula (VIIa-f),
A-B-D-E (VIIa)
A-E (VIIb)
A-SO₂-E (VIIc)
A-B-SO₂R⁴ (VIId)
A-SO₃W (VIIe)
A-COW (VIIf)
in which, each independently,
A is absent or is a C₁-C₈-alkylene radical and
B is absent or is oxygen, sulphur or NR⁴,
where R⁴ is hydrogen, C₁-C₈-alkyl, C₆-C₁₅-arylalkyl or C₅-C₁₄-aryl and
D is a carbonyl group and
E is R⁵, OR⁵, NHR⁶ or N(R⁶)₂,
where R⁵ is C₁-C₈-alkyl, C₆-C₁₅-arylalkyl, C₁-C₈-haloalkyl or C₅₋C₁₄-aryl and
R⁶ is in each case independently C₁-C₈-alkyl, C₆-C₁₅-arylalkyl or C₅₋C₁₄-aryl, or N(R⁶)₂ together is a cyclic amino radical and
W is OH, NH₂, or OM where M may be an alkali metal ion, half an equivalent of an alkaline earth metal ion, an ammonium ion or an organic ammonium ion.

9. Process according to at least one of Claims 7 and 8, **characterized in that** the copper complexes containing ligands of the formula (I) are used in amounts of 0.02 mol% to 10 mol%, based on the compounds of the formula (IV) used.

10. Process according to at least one of Claims 7 to 9, **characterized in that** the bases used are alkali metal and/or alkaline earth metal carbonates, hydrogencarbonates, alkoxides, phosphates, fluorides and/or hydroxides.

11. Process according to at least one of Claims 7 to 10, **characterized in that** the bases used are pretreated by grinding and/or drying.

12. [(N,N-Dipyridyl-imidazolylidene)copper dibromide], [2,6-{bis-N-(N-methylimidazolylidene)methyl)pyridine}copper dibromide] and [1,3-{bis-N-(N-methylimidazolylidene)methyl)-5-methylbenzene} copper dibromide].

13. Copper complexes containing ligands of the formula (I) 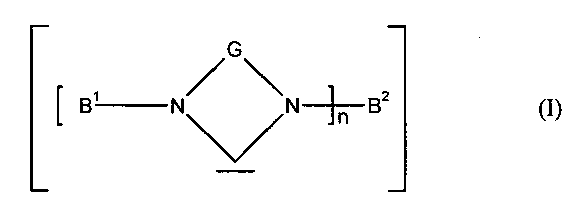 in which
G is a 1,2-ethanediyl or 1,2-ethenediyl radical which is optionally mono- or polysubstituted and
B¹ is C₅-C₁₈-aryl, C₁-C₁₈-alkyl which may optionally have one or more heteroatoms from the group of oxygen, nitrogen or sulphur, or C₆-C₁₉-aralkyl and
B² is an n-valent radical having a total of 2 to 40 carbon atoms and
n is 2 or 3.

## Revendications

1. Catalyseurs comprenant des complexes du cuivre des ligands de formule (I) 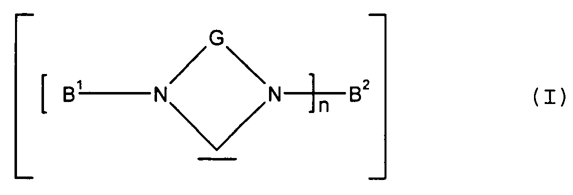 dans laquelle
G représente un radical 1,2-éthanediyle ou 1,2-éthènediyle, qui est éventuellement mono- ou poly-substitué, et
B¹ représente un aryle en C₅-C₁₈, un alkyle en C₁-C₁₈, qui peut éventuellement renfermer un ou plusieurs hétéroatomes parmi le groupe constitué d'un oxygène, d'un azote ou d'un soufre, ou un C₆-C₁₉-aralkyle, et
B² représente un radical à valence n ayant au total de 2 à 40 atomes de carbone, et
n vaut 1, 2 ou 3.

2. Catalyseurs selon la revendication 1, **caractérisés en ce que** G représente un radical 1,2-éthanediyle
ou 1,2-éthènediyle, qui est éventuellement mono- ou poly-substitué par un alkyle en C₁-C₈.

3. Catalyseurs selon au moins l'une des revendications 1 et 2, **caractérisés en ce que** B¹ représente, dans le cas où n = 1, un hétéroaryle en C₅-C₁₈ ou un alkyle en C₁-C₁₈, qui renferme un ou plusieurs hétéroatomes parmi le groupe constitué d'un oxygène, d'un azote ou d'un soufre, et représente, dans le cas où n = 2 ou 3, un alkyle en C₁-C₁₈, un C₆-C₁₁-aralkyle ou un aryle en C₆-C₁₀ .

4. Catalyseurs selon au moins l'une des revendications 1 à 3, **caractérisés en ce que** les complexes du cuivre sont ceux de formule (Ia) 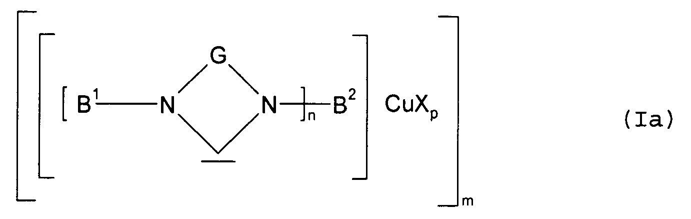 dans laquelle
n, G et B¹ et B² présentent les significations et les plages préférentielles mentionnées dans les revendications précédentes, et
Xₚ représente un halogénure, un carboxylate d'halogénoalkyle en C₁-C₈, un carboxylate d'alkyle en C₁-C₈, un sulfonate d'halogénoalkyle en C₁-C₈, un sulfonate d'aryle en C₅-C₁₈, un cyanure, un acétylacétonate éventuellement fluoré, un nitrate, un oxinate, un phosphate, un carbonate, un hexafluorophosphate, un tétraphénylborate, un tétrakis (pentafluorophényl)borate ou un tétrafluoroborate, et
p vaut 0, 1 ou 2 et
m vaut 1, 2, 3, 4, 5 ou 6.

5. Catalyseurs selon au moins l'une des revendications 1 à 4, **caractérisés en ce que** les complexes du cuivre sont choisis parmi le [dibromure de (N,N-dipyridylimidazolylidène)-cuivre], le [dibromure de 2,6-{bis-N-(N-méthylimidazolylidène)méthyl)pyridine}-cuivre] et le [dibromure de 1,3-{bis-N-(N-méthylimidazolylidène)méthyl)-5-méthylbenzène}-cuivre].

6. Utilisation de catalyseurs selon au moins l'une des revendications 1 à 5 pour joindre catalytiquement des liaisons carbone-azote, carbone-oxygène et carbone-soufre, ainsi que pour préparer des alcynes.

7. Procédé de préparation de composés de formule (IV),
Ar-(F-R²)ₙ (IV)
dans laquelle
n vaut 1, 2 ou 3, et
Ar représente un radical aromatique substitué ou non substitué, et
F représente un oxygène, un soufre, un NR³, un NR³CO ou un éthynediyle, dans lesquels R³ représente un hydrogène, un alkyle en C₁-C₁₂, un aryle en C₅-C₁₈ ou un C₆-C₁₉-arylalkyle, et
R² représente un Ar, un alkyle en C₁-C₁₂, un halogénoalkyle en C₁-C₁₂, un alcényle en C₂-C₁₂ ou un C₆-C₁₉-arylalkyle,
**caractérisé en ce que** des composés de formule (V)
Ar-Z (V)
dans laquelle
Ar présente la signification mentionnée précédemment, et
Z représente un chlore, un brome, un iode, un sel de diazonium ou un sulfonate,
sont mis à réagir avec des composés de formule (VI),
H-F-R² (VI)
dans laquelle F et R² présentent la signification mentionnée précédemment, et
où la réaction est effectuée en présence d'une base et de catalyseurs selon au moins l'une des revendications 1 à 5.

8. Procédé selon la revendication 7, **caractérisé en ce que** Ar représente des radicaux aromatiques carbocycliques ayant de 6 à 24 atomes de carbone du squelette ou des radicaux hétéroaromatiques ayant de 5 à 24 atomes du squelette, dans lesquels zéro, un, deux ou trois atomes du squelette par cycle, mais au moins un atome du squelette dans la molécule, sont des hétéroatomes, qui sont choisis parmi le groupe constitué d'un azote, d'un soufre ou d'un oxygène, et où les radicaux aromatiques carbocycliques ou les radicaux hétéroaromatiques peuvent être substitués par jusqu'à cinq substituants identiques ou différents par cycle, qui sont choisis parmi le groupe constitué d'un hydroxy, d'un chlore, d'un fluor, d'un nitro, d'un cyano, d'un formyle libre ou protégé, d'un alkyle en C₁-C₁₂, d'un aryle en C₅-C₁₄, d'un C₆-C₁₅₋arylalkyle, d'un -PO-[(C₁-C₈)-alkyle]₂, d'un -PO-[(C₅-C₁₄) -aryle]₂, d'un -PO- [(C₁-C₈) -alkyl) (C₅-C₁₄) - aryle)] , d'un tri (C₁-C₈-alkyl) siloxyle ou de radicaux de formules (VIIa-f),
A-B-D-E (VIIa)
A-E (VIIb)
A-SO₂-E (VIIc)
A-B-SO₂R⁴ (VIId)
A-SO₃W (VIIe)
A-COW (VIIf)
dans lesquelles, indépendamment les uns des autres,
A est absent ou représente un radical alkylène en C₁-C₈, et
B est absent ou représente un oxygène, un soufre, ou un NR⁴ ,
dans lequel R⁴ représente un hydrogène, un alkyle en C₁-C₈, un C₆-C₁₅-arylalkyle ou un aryle en C₅-C₁₄, et
D représente un groupe carbonyle, et
E représente un R⁵, un OR⁵, un NHR⁶ ou un N (R⁶)₂,
dans lesquels R⁵ représente un alkyle en C₁-C₈, un C₆-C₁₅-arylalkyle, un halogénoalkyle en C₁-C₈ ou un aryle en C₅-C₁₄, et
R⁶ représente chacun indépendamment un alkyle en C₁-C₈, un C₆-C₁₅-arylalkyle ou un aryle en C₅-C₁₄, ou N(R⁶)₂ représente conjointement un radical amino cyclique, et
W représente un OH, un NH₂ ou un OM, dans lequel M peut représenter un ion de métal alcalin, un demi-équivalent d'un ion de métal alcalino-terreux, un ion ammonium ou un ion ammonium organique.

9. Procédé selon au moins l'une des revendications 7 et 8, **caractérisé en ce que** les complexes du cuivre renfermant des ligands de formule (I) sont utilisés en quantités de 0,02 % en moles à 10 % en moles, par rapport aux composés utilisés de formule (IV).

10. Procédé selon au moins l'une des revendications 7 à 9, **caractérisé en ce que** l'on utilise, en tant que base, des carbonates, des hydrogénocarbonates, des alcoolates, des phosphates, des fluorures et/ou des hydroxydes de métaux alcalins et/ou alcalino-terreux.

11. Procédé selon au moins l'une des revendications 7 à 10, **caractérisé en ce que** les bases utilisées sont prétraitées par broyage et/ou séchage.

12. [Dibromure de (N,N-dipyridylimidazolylidène)-cuivre], [dibromure de 2,6-{bis-N-(N-méthylimidazolylidène)méthyl)pyridine}-cuivre] et [dibromure de 1,3-{bis-N-(N-méthylimidazolylidène)méthyl)-5-méthylbenzène}-cuivre].

13. Complexes du cuivre renfermant des ligands de formule (I) 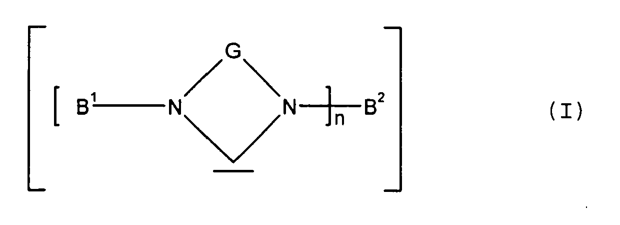 dans laquelle
G représente un radical 1,2-éthanediyle ou 1,2-éthènediyle, qui est éventuellement mono- ou poly-substitué, et
B¹ représente un aryle en C₅-C₁₈, un alkyle en C₁-C₁₈, qui peut éventuellement renfermer un ou plusieurs hétéroatomes parmi le groupe constitué d'un oxygène, d'un azote ou d'un soufre, ou un C₆-C₁₉-aralkyle, et
B² représente un radical à valence n ayant au total de 2 à 40 atomes de carbone, et
n vaut 2 ou 3.
